# EUROPÄISCHE PATENTANMELDUNG

(11) **EP 1 031 716 A2**
(43) Veröffentlichungstag der Anmeldung: **30.08.2000**
(21) Anmeldenummer: 00102674.9
(22) Anmeldetag: 09.02.2000
(51) Int. Cl.: F02C 7/22

(54) **Kraftstoffpumpenantrieb eines Flugtriebwerks und Flugtriebwerk**

(30) Priorität: 28.02.1999 DE 19908531
(71) Anmelder: MTU MOTOREN- UND TURBINEN-UNION MÜNCHEN GMBH, 80976 München (DE)
(72) Erfinder: Schwamm, Friedrich, 85604 Zorneding (DE)

(57) **Zusammenfassung**

Ein Kraftstoffpumpenantrieb eines Flugtriebwerks weist einen Pumpenmotor (18A) für eine Kraftstoffpumpe (12) und eine Stromversorgungs- und Steuereinrichtung (20A) auf. Der Antrieb ist dadurch weitergebildet, daß der Pumpenmotor (18A) ein Drehstrom-Motor ist, und daß die Stromversorgungs- und Steuereinrichtung (20A) dazu eingerichtet ist, Drehstrom für den Pumpenmotor (18A) mit einer der gewünschten Förderleistung der Kraftstoffpumpe (12) entsprechenden Frequenz zu erzeugen. Ein Flugtriebwerk ist mit einem derartigen Kraftstoffpumpenantrieb ausgestattet. Die genannten Vorrichtungen arbeiten bei geringem Bauteil- und Konstruktionsaufwand zuverlässig.

## Beschreibung

Die Erfindung betrifft einen Antrieb für eine Kraftstoffpumpe eines Flugtriebwerks nach dem Oberbegriff des Anspruchs 1 sowie ein Flugtriebwerk mit einem derartigen Antrieb. Die Erfindung ist für alle Arten von Flugtriebwerken geeignet. Insbesondere ist der Einsatz der Erfindung für Düsentriebwerke kleiner und mittlerer Leistung vorgesehen.

Es ist bekannt, bei einem Flugtriebwerk eine von einem Gleichstrommotor angetriebene Kraftstoffpumpe einzusetzen. Die Drehzahl dieses Motors und damit die Kraftstoffzumessung für das Triebwerk hängen von der augenblicklichen Motorlast und von der Ankerspannung ab.

Um bei einem solchen Triebwerk eine dem jeweiligen Betriebszustand angepaßte Förderleistung zu erhalten, ist ein aufwendiger Regelkreis mit einem Drehzahlsensor an der Pumpenwelle erforderlich. Überdies ist der Gleichstrommotor relativ komplex aufgebaut und dadurch störanfällig. Insbesondere der Kommutator stellt eine Schwachstelle für die erforderliche hohe Zuverlässigkeit dar. Die Kommutator-Bürsten nutzen sich schnell ab und müssen regelmäßig gewartet werden. Wegen der rotierenden Ankerwicklung ist ein Gleichstrommotor ferner auf relativ niedrige Drehzahlen begrenzt.

Bei anderen bekannten Flugtriebwerken wird die Kraftstoffpumpe über ein Getriebe von der Hochdruckwelle der Turbinenbaugruppe des Triebwerks angetrieben. Die Pumpe fördert daher ein Kraftstoffvolumen, das der Turbinendrehzahl proportional ist. Die eigentliche Kraftstoffzumessung für die Turbinenbaugruppe wird von einer der Pumpe nachgeschalteten Ventileinrichtung gesteuert.

Da die Turbinenbaugruppe bei gleichen Drehzahlen einen stark unterschiedlichen, vom Betriebspunkt abhängigen Kraftstoffbedarf hat, muß die Pumpe auf die höchste erforderliche Förderleistung ausgelegt sein. Für andere Betriebszustände ist die Kraftstoffpumpe dann stark überdimensioniert, so daß sie der Turbinenbaugruppe mehr Leistung als notwendig entnimmt. Überdies ist die der Pumpe nachgeschaltete Ventileinrichtung mechanisch aufwendig und gleichzeitig empfindlich. Die gesamte Anordnung ist daher teuer und ausfallgefährdet.

Die Erfindung hat demgemäß die Aufgabe, die genannten Probleme zumindest teilweise zu vermeiden und einen Kraftstoffpumpenantrieb sowie ein Flugtriebwerk zu schaffen, die bei. geringem Bauteil- und Konstruktionsaufwand zuverlässig arbeiten.

Erfindungsgemäß wird diese Aufgabe durch einen Kraftstoffpumpenantrieb mit den Merkmalen des Anspruchs 1 sowie durch ein Flugtriebwerk gemäß Anspruch 7 gelöst. Die abhängigen Ansprüche betreffen bevorzugte Ausgestaltungen der Erfindung.

Die Erfindung beruht auf der Grundidee, als Motor zum Antrieb der Kraftstoffpumpe einen Drehstrom-Motor zu verwenden. Die Drehzahl dieses Pumpenmotors und damit die Förderleistung der Kraftstoffpumpe werden dadurch eingestellt, daß eine Stromversorgungs- und Steuereinrichtung einen Drehstrom für den Pumpenmotor in einer der gewünschten Förderleistung entsprechenden Frequenz erzeugt.

Der erfindungsgemäß als Pumpenmotor vorgeschlagene Drehstrom-Motor braucht keine Bürsten oder Ankerwicklungen aufzuweisen und kann daher sehr viel robuster und weniger aufwendig als ein Gleichstrommotor aufgebaut sein. Insbesondere Drehstrom-Asynchronmotoren sind sehr kostengünstig. Der bevorzugt eingesetzte Bautyp eines als Käfigläufer ausgebildeten Asynchronmotors ist besonders kostengünstig und zuverlässig. Etwas teuerer, aber in sehr kleinen Bauformen verfügbar, sind Drehstrom-Synchronmotoren, insbesondere solche mit Permanentmagnet-Läufer.

Die Drehzahl des erfindungsgemäß vorgesehenen Drehstrom-Motors ist bei Asynchronmotoren weitgehend und bei Synchronmotoren vollständig von der Drehstromfrequenz bestimmt. Die Abweichung zwischen Drehzahl und Drehstromfrequenz (Schlupf) bei Asynchronmotoren beträgt in der Regel nur wenige Prozent. Dieser Schlupf kann oftmals als konstant angesehen und bei der Auslegung der Kraftstoffpumpe oder beim Erzeugen des Drehstroms berücksichtigt werden. In anderen Ausführungsformen wird der Motorschlupf (beispielsweise in Abhängigkeit von der geforderten Motorleistung) geschätzt und bei der Berechnung der Drehstromfrequenz mit herangezogen.

Somit ist auch bei einem Asynchronmotor als Pumpenmotor die Drehstromfrequenz zur Einstellung der Motordrehzahl in den meisten Anwendungsfällen ausreichend. Auf einen Drehzahlsensor oder Tacho sowie eine Regelschleife kann dann verzichtet werden. In Ausführungsalternativen wird jedoch für eine sehr genaue Kraftstoffzumessung entweder ein Synchronmotor verwendet oder der Asynchronmotor mittels eines Tachogenerators oder eines Fördermengensensors geregelt.

In bevorzugten Ausführungsformen steigt bzw. fällt die Spannung des Drehstroms ungefähr proportional mit dessen Frequenz. Die Drehzahl des Pumpenmotors kann dann auch bei hohen Leistungsanforderungen besonders gut eingestellt werden. Zur Erzeugung des Drehstroms weist die Stromversorgungs- und Steuereinrichtung vorzugsweise einen Drehstromsteller auf.

In bevorzugten Ausgestaltungen des Flugtriebwerks ist ferner ein von der Turbinenbaugruppe angetriebener Generator vorgesehen, der zumindest zeitweise und/oder teilweise zur Stromversorgung des Pumpenmotors dient. Dieser Generator kann ein Drehstromgenerator sein. Die Stromversorgungs- und Steuereinrichtung kann dann einen insbesondere steuerbaren Gleichrichter zur Erzeugung der Gleichspannung für den Drehstromsteller aufweisen. Bevorzugt ist vorgesehen, die durch diesen Gleichrichter erzeugte Versorgungsspannung für den Drehstromsteller so zu steuern, daß sie nur wenig höher als der Scheitelwert der Drehstrom-Spannung ist. Damit kann die Taktfrequenz des Drehstromstellers relativ klein gehalten werden, so daß auch bei niedrigen Motordrehzahlen keine zu schmalen Versorgungsspannungsimpulse für den Pumpenmotor erzeugt werden müssen.

Mehrere Ausführungsbeispiele der Erfindung werden nun unter Hinweis auf die schematischen Zeichnungen genauer beschrieben. Es stellen dar:
Fig. 1 ein Blockdiagramm des Aufbaus eines Flugtriebwerks nach dem Stand der Technik,
Fig. 2 ein Blockdiagramm wie in Fig. 1 für ein erfindungsgemäßes Flugtriebwerk,
Fig. 3 ein Blockschaltbild der in Fig. 2 gezeigten Stromversorgungs- und Steuereinrichtung, und
Fig. 4 eine Ausführungsalternative von Fig. 3.

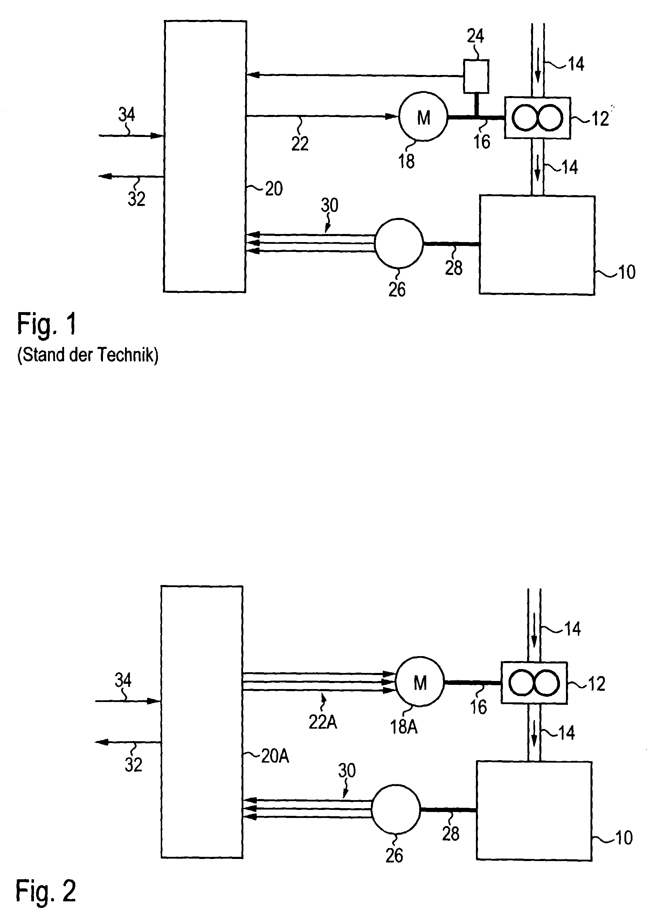

Bei dem Flugtriebwerk gemäß Fig. 1 ist eine an sich bekannte Turbinenbaugruppe 10 vorgesehen, die von einer Kraftstoffpumpe 12 über eine Kraftstoffleitung 14 mit Flugkraftstoff versorgt wird. Die Kraftstoffpumpe 12, die beispielsweise als Zahnrad- oder Verdrängerpumpe ausgebildet sein kann, wird über eine Pumpenwelle 16 von einem Gleichstrom-Pumpenmotor 18 angetrieben. Eine Stromversorgungs- und Steuereinrichtung 20 versorgt den Gleichstrom-Pumpenmotor 18 über eine Versorgungsleitung 22 mit einer geregelten Antriebsspannung. Zur Drehzahlregelung des Gleichstrom-Pumpenmotors 18 ist ein Drehzahlsensor 24 mechanisch an die Pumpenwelle 16 gekoppelt und elektrisch mit einem Rückkopplungseingang der Stromversorgungs- und Steuereinrichtung 20 verbunden.

Ein als Drehstrom-Generator ausgestalteter Generator 26 ist über eine Antriebswelle 28 an die Hochdruckwelle (nicht gezeigt) der Turbinenbaugruppe 10 gekoppelt. Der von dem Generator 26 gelieferte 3-phasige Drehstrom wird über eine 3-polige Leitung 30 an die Stromversorgungs- und Steuereinrichtung 20 geleitet. Während des Normalbetriebs der Turbinenbaugruppe 10 dient der Generator 26 nicht nur zur Stromversorgung des Pumpenmotors 18, sondern auch zur Versorgung des gesamten Flugzeug-Bordnetzes über einen Bordnetzausgang 32. Bei Stillstand und während das Anlassens der Turbinenbaugruppe 10 wird das Triebwerk von einer geeigneten Batterie, beispielsweise einer Brennstoffzelle, über einen Fremdversorgungseingang 34 mit Spannung versorgt. Die Bordnetz- bzw. die Fremdversorgungsspannung können beispielsweise 270 V betragen.

Das erfindungsgemäße Triebwerk gemäß Fig. 2 weist im Vergleich zu dem in Fig. 1 gezeigten Triebwerk nur den Pumpenmotor 18A, die Stromversorgungs- und Steuereinnichtung 20A und die Versorgungsleitung 22A als modifizierte Komponenten auf. Ferner ist bei dem in Fig. 2 dargestellten Ausführungsbeispiel kein Drehzahlsensor für den Pumpenmotor 18A (entsprechend dem Drehzahlsensor 24 in Fig. 1) vorgesehen. Alle anderen Bauteile sind in Fig. 1 und Fig. 2 identisch, so daß insofern auf die oben gegebene Beschreibung von Fig. 1 verwiesen wird.

Der Pumpenmotor 18A gemäß Fig. 2 ist ein als Käfigläufer ausgestalteter Drehstrom-Asynchronmotor. Demgemäß ist auch die Stromversorgungs- und Steuereinnichtung 20A zur Erzeugung eines Drehstroms geeigneter Frequenz eingerichtet. Dieser 3-phasige Drehstrom wird über die 3-polige Versorgungsleitung 22A zum Pumpenmotor 18A übertragen. Der Schlupf des Pumpenmotons 18A kann beispielsweise (je nach Belastung) zwischen 2 % und 6 % betragen. Für die hier betrachtete Anwendung heißt dies, daß die Motordrehzahl mit der benötigten Genauigkeit durch eine bloße Steuerung der Drehstromfrequenz eingestellt werden kann. Auf eine Regelschleife für die Motordrehzahl mit einem Drehzahlsensor kann daher im hier beschriebenen Ausführungsbeispiel verzichtet werden. In Ausführungsvarianten ist dennoch eine solche Regelschleife vorgesehen, um eine besonders genaue Einstellung der Kraftstoff-Förderleistung zu erreichen. An anderen Ausführungsvarianten ist der Pumpenmotor 18A ein Drehstrom-Synchronmotor mit Permanentmagnet-Läufer.

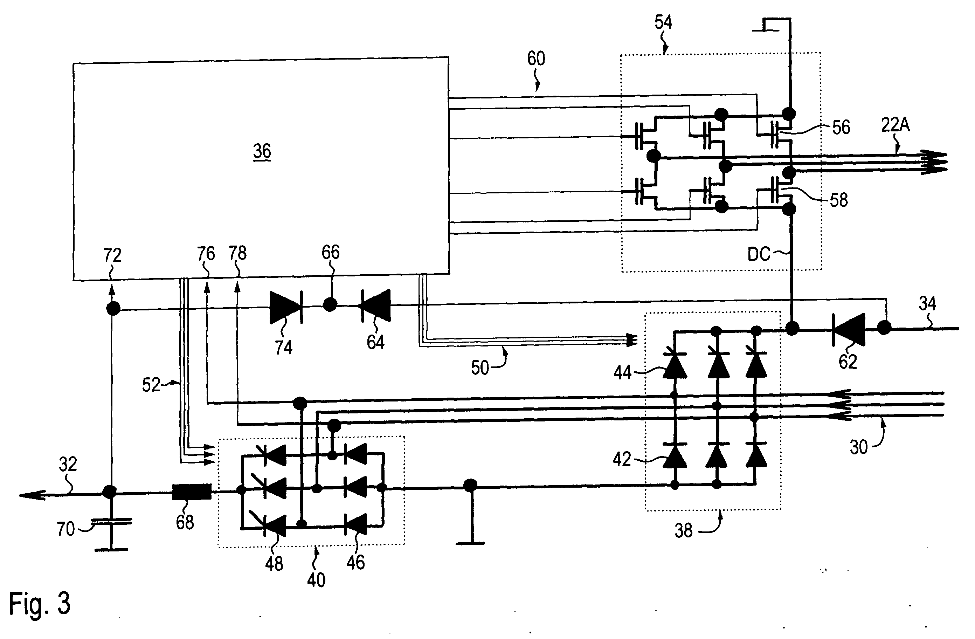

Bei der in Fig. 3 genauer gezeigten Stromversorgungs- und Steuereinrichtung 20A ist eine zentrale Steuerlogik 36 vorgesehen, die als abgeschlossenes Modul ausgestaltet ist und einen geeignet programmierten Mikrocontroller sowie Treiber und Wandler aufweist. Der Generator 26 (Fig. 2) ist über die 3-polige Leitung 30 an einen ersten Gleichrichter 38 und einen zweiten Gleichrichter 40 angeschlossen.

Die beiden Gleichrichter 38, 40 sind im vorliegenden Ausführungsbeispiel identisch aufgebaut. Sie sind beide als halbgesteuerte Brückengleichrichter ausgestaltet. Jeder der Gleichrichter 38, 40 weist drei Brückenzweige für je eine Phase des vom Generator 26 erzeugten Drehstroms auf. In jedem Brückenzweig sind eine Diode und ein als Thyristor ausgestaltetes Schaltelement in Reihe zwischen Masse und einen positiven Gleichspannungsanschluß geschaltet. Beispielhaft sind in Fig. 3 die Diode und das Schaltelement in einem ersten Brückenzweig des ersten Gleichrichters 38 mit den Bezugszeichen 42 bzw. 44 versehen, und die Diode und das Schaltelement in dem entsprechenden Brückenzweig des zweiten Gleichrichters 40 sind mit den Bezugszeichen 46 bzw. 48 bezeichnet. Je drei Steuerleitungen 50, 52 verbinden die Schaltelemente der beiden Gleichrichter 38, 40 mit der Steuerlogik 36.

In Ausführungsalternativen können die Gleichrichter 38, 40 anders aufgebaut sein. Beispielsweise kann einer der Gleichrichter 38, 40 (oder beide) als vollgesteuerter Gleichrichter mit sechs Schaltelementen oder als ungesteuerter Gleichrichter mit sechs Dioden ausgestaltet sein. Die Schaltelemente können statt Thyristoren auch andere elektronische Schalter wie Feldeffekttransistoren oder IGBTs (insulated gate bipolar transistors) oder bipolare Transistoren sein.

Der erste Gleichrichter 38 erzeugt eine interne Gleichspannung DC, die an einem Drehstromsteller 54 anliegt. Der Drehstromsteller 54 dient zur Erzeugung des auf der Versorgungsleitung 22A fließenden Drehstroms für den Pumpenmotor 18A. Für jede Phase dieses Drehstroms weist der Drehstromsteller 54 einen an die Gleichspannung DC angeschlossenen Brückenzweig mit zwei in Reihe geschalteten Schaltelementen auf. Die Schaltelemente eines solchen Brückenzweigs sind in Fig. 3 beispielhaft mit den Bezugsziffern 56 bzw. 58 bezeichnet. Insgesamt sechs Steuerleitungen 60 verbinden die Steuereingänge der Schaltelemente des Drehstromstellers 54 mit der Steuerlogik 36.

Im vorliegend beschriebenen Ausführungsbeispiel sind die Schaltelemente des Drehstromstellers 54 als IGBTs ausgestaltet. In Ausführungsalternativen können jedoch andere Schaltelemente wie zum Beispiel Feldeffekttransistoren oder die oben im Zusammenhang mit den Gleichrichtern 38, 40 erwähnten Bauteile eingesetzt werden.

In der Schaltung von Fig. 3 ist ferner der Fremdversorgungseingang 34 über eine erste Diode 62 mit dem Gleichspannungsausgang (Gleichspannung DC) des ersten Gleichrichters 38 und über eine zweite Diode 64 mit einem Versorgungseingang 66 der Steuerlogik 36 verbunden. Die von dem zweiten Gleichrichter 40 erzeugte Gleichspannung liegt über einen Tiefpaß, der aus einer Induktivität 68 und einem Kondensator 70 gebildet ist, an dem Bordnetzausgang 32 sowie an einem Spannungsregeleingang 72 der Steuerlogik 36 an. Ferner ist diese Gleichspannung über eine dritte Diode 74 mit dem Versorgungseingang 66 der Steuerlogik 36 verbunden. Schließlich sind zwei Phasen des auf der 3-poligen Leitung 30 übertragenen Drehstroms an je einen Phaseneingang 76, 78 der Steuerlogik 36 angeschlossen.

Im Normalbetrieb des Flugtriebwerks gemäß Fig. 2 und Fig. 3 erzeugt der Generator 26 hinreichend viel Energie zur Versorgung des gesamten Bordnetzes. Dieser Drehstrom auf der Leitung 30 wird von dem zweiten Gleichrichter 40 gleichgerichtet. Nach einer Filterung durch den aus der Induktivität 68 und dem Kondensator 70 gebildeten Tiefpaß wird die vom zweiten Gleichrichter 40 abgegebene Gleichspannung über den Bordnetzausgang 32 in das allgemeine Bordnetz eingespeist und dient ferner (über die dritte Diode 74) zur Versorgung der Steuerlogik 36.

Die Schaltelemente des zweiten Gleichrichters 40 werden von der Steuerlogik 36 über die Steuerleitungen 52 angesteuert, um durch eine Phasenanschnittsregelung die Höhe der an den Bordnetzausgang 32 angelegten Gleichspannung auf 270 V zu halten. Zu dieser Regelung wird der Istwert dieser Gleichspannung von der Steuerlogik 36 über den Spannungsregeleingang 72 gemessen. Außerdem erhält die Steuerlogik 36 über die Phaseneingänge 76 und 78 die zur Ansteuerung des zweiten Gleichrichters 40 benötigten Informationen hinsichtlich der Phasenlage der Drehstrom-Phasen auf der Leitung 30.

Die Steuerlogik 36 bestimmt ferner aus geeigneten Meß- und Eingangswerten den augenblicklichen Kraftstoffbedarf der Turbinenbaugruppe 10 und daraus die erforderliche Drehzahl der Kraftstoffpumpe 12. Aus dieser Drehzahl leitet die Steuerlogik 36 Werte für die Frequenz und Spannung des über die Versorgungsleitung 22A an den Pumpenmotor 18A anzulegenden Drehstroms ab. Im vorliegend beschriebenen Ausführungsbeispiel sind die Spannung und Frequenz des Drehstroms ungefähr proportional zueinander. In Ausführungsalternativen kann jedoch, abhängig von den Eigenschaften des Pumpenmotors 18A, ein anderer Frequenz/Spannungs-Zusammenhang implementiert werden.

Um den gewünschten Drehstrom zu erzeugen, legt die Steuerlogik 36 zunächst einen Wert für die Gleichspannung DC fest, der etwas höher als die zu erzielende Drehstrom-Spannung ist. Diese Gleichspannung DC wird von der Steuerlogik 36 erzeugt, indem sie geeignete Schaltsignale für die Schaltelemente des ersten Gleichrichters 38 an die Steuerleitungen 50 anlegt. Der erste Gleichrichter 38 arbeitet dabei ebenso wie der zweite Gleichrichter 40 in einem Phasenanschnittsbetrieb.

Die Steuerlogik 36 generiert ferner geeignete Ansteuersignale für die Schaltelemente des Drehstromstellers 54, um aus der Gleichspannung DC den Versorgungs-Drehstrom für den Pumpenmotor 18A mit den oben erwähnten Spannungs- und Frequenzcharakteristika zu erzeugen. Für jede Phase des Drehstroms wird ein Brückenzweig des Drehstromstellers 54 in einem Pulsweitenmodulationsverfahren angesteuert, um einen ungefähr sinusförmigen Spannungsverlauf mit der gewünschten Effektivspannung zu erhalten.

Die im vorliegenden Ausführungsbeispiel beschriebene Steuerung des ersten Gleichrichters 38 hat den Vorteil, daß auch in Betriebsarten mit sehr langsamen Pumpendrehzahlen ein vernünftiges Tastverhältnis (Puls-Pausen-Verhältnis) des Drehstromstellers 54 erreicht werden kann. In besonders bauteilsparenden Ausführungsalternativen erfolgt die Drehstromerzeugung jedoch durch den Drehstromsteller 54 aus einer konstanten Gleichspannung DC, die so hoch wie die höchste erforderliche Drehstrom-Spannung ist. Insbesondere in solchen Ausführungsalternativen können geeignete Filter für den Drehstrom vorgesehen sein.

Beim Anlassen des Triebwerks dient zunächst die am Fremdversorgungseingang 34 anliegende Spannung zur Versorgung der Steuerlogik 36 (über die zweite Diode 64) sowie des Drehstromstellers 54 (über die erste Diode 62). Während dieses Zeitraums der Fremdversorgung ist das Tastverhältnis des Drehstromstellers 54 in der Regel sehr niedrig, weil die Fremdversorgungsspannung von 270 V als Gleichspannung DC unmittelbar am Drehstromsteller 54 anliegt. Daher wird, sobald der Generator 26 eine ausreichende Spannung erzeugt, die Fremdversorgung (durch einen in den Figuren nicht gezeigten Schalter) unterbrochen.

Dieses Umschalten von Fremd- auf Generatorversorgung erfolgt schon, wenn die Drehzahl der Turbinenbaugruppe 10 noch zu gering ist, um den gesamten Bordnetzbedarf durch den Generator 26 zu decken. Daher wird während einer Übergangsphase die vom Generator 26 gelieferte Leistung ausschließlich zur Drehstromerzeugung für den Pumpenmotor 18A verwendet. Der Bordnetzausgang 32 wird (durch einen weiteren in den Figuren nicht gezeigten Schalter) erst aktiviert, wenn die Drehzahl der Turbinenbaugruppe 10 und damit des Generators 26 hinreichend hoch zur Versorgung des gesamten Flugzeuges ist.

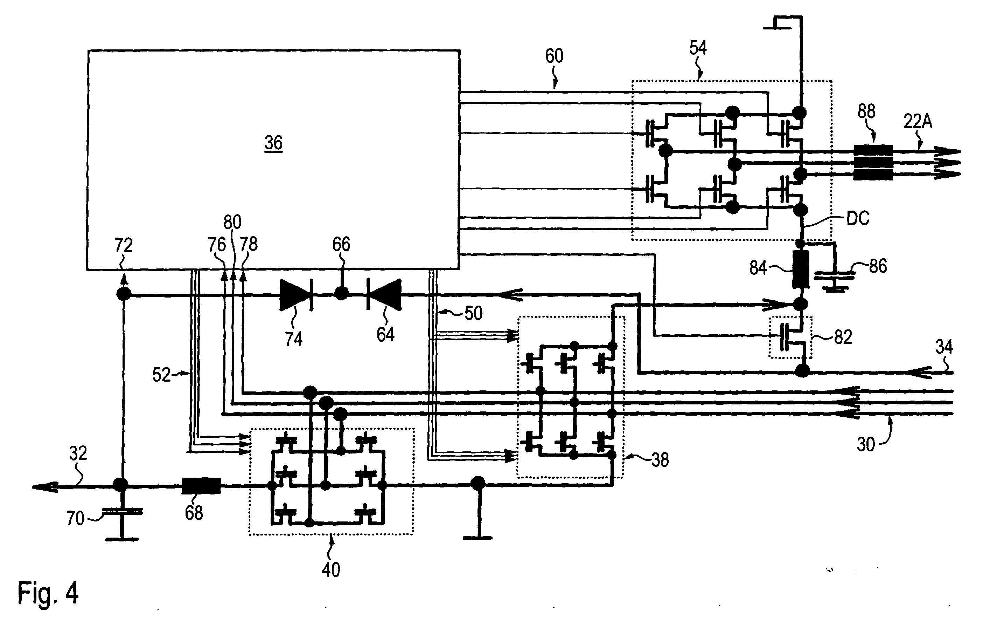

Bei der in Fig. 4 gezeigten Ausführungsvariante der Stromversorgungs- und Steuereinrichtung 20A sind die beiden Gleichrichter 38, 40, wie bereits oben als Möglichkeit erwähnt, als vollgesteuerte Gleichrichter mit jeweils sechs Schaltelementen ausgestaltet. Dementsprechend sind auch je sechs Steuerleitungen 50, 52 für die Gleichrichter 38, 40 vorgesehen (in Fig. 4 sind davon nur drei Steuerleitungen 52 gezeigt). Als weiterer Unterschied zu Fig. 3 weist die Steuerlogik 36 gemäß Fig. 4 drei Phaseneingänge 76, 78, 80 auf, die an die drei Phasen des auf der Leitung 30 übertragenen Drehstroms angeschlossen sind.

Statt der ersten Diode 62 ist in der Schaltung nach Fig. 4 ein von der Steuerlogik 36 angesteuertes Schaltelement 82 vorgesehen, durch das der Fremdversorgungseingang 34 zur Lieferung der Gleichspannung DC herangezogen werden kann. Diese Ausgestaltung hat den Vorteil, daß sie auch bei einer Fremdversorgungsspannung von mehr als der Bordnetzspannung eingesetzt werden kann.

Ferner ist in Fig. 4 ein aus einer Induktivität 84 und einem Kondensator 86 gebildeter Tiefpaß zur Filterung der vom ersten Gleichrichter 38 erzeugten Gleichspannung DC vorgesehen. Je eine Filterdrossel 88 ist in je eine Phase des von dem Drehstromsteller 54 erzeugten Drehstroms für den Pumpenmotor 18A geschaltet. Durch diese LC-Filterung im Gleichstrombereich und die zusätzliche Filterung im Drehstrombereich können elektromagnetische Störstrahlungen verringert und die Laufeigenschaften des Pumpenmotors 18A verbessert werden. In Ausführungsvarianten wird eine adäquate Entstörung bereits entweder durch den Tiefpaß im Gleichstrombereich oder durch die Filterdrosseln 88 erreicht.

Im übrigen sind die Schaltungen von Fig. 4 und Fig. 3 identisch, so daß auf die obige Beschreibung verwiesen wird. Weitere Ausführungsvarianten der Erfindung sind vorgesehen, bei denen die in Fig. 3 und Fig. 4 gezeigten Baugruppen beliebig kombiniert sind.

### Bezugszeichenliste

- 10: Turbinenbaugruppe
- 12: Kraftstoffpumpe
- 14: Kraftstoffleitung
- 16: Pumpenwelle
- 18: Pumpenmotor (Stand der Technik)
- 18A: Pumpenmotor (Erfindung)
- 20: Stromversorgungs- und Steuereinrichtung (Stand der Technik)
- 20A: Stromversorgungs- und Steuereinrichtung (Erfindung)
- 22: Versorgungsleitung (Stand der Technik)
- 22A: Versorgungsleitung (Erfindung)
- 24: Drehzahlsensor
- 26: Generator
- 28: Antriebswelle
- 30: Leitung
- 32: Bordnetzausgang
- 34: Fremdversorgungseingang
- 36: Steuerlogik
- 38: erster Gleichrichter
- 40: zweiter Gleichrichter
- 42: Diode des ersten Gleichrichters
- 44: Schaltelement des ersten Gleichrichters
- 46: Diode des zweiten Gleichrichters
- 48: Schaltelement des zweiten Gleichrichters
- 50: Steuerleitungen für den ersten Gleichrichter
- 52: Steuerleitungen für den zweiten Gleichrichter
- 54: Drehstromsteller
- 56: Schaltelement des Drehstromstellers
- 58: Schaltelement des Drehstromstellers
- 60: Steuerleitungen für den Drehstromsteller
- 62: erste Diode
- 64: zweite Diode
- 66: Versorgungseingang
- 68: Induktivität
- 70: Kondensator
- 72: Spannungsregeleingang
- 74: dritte Diode
- 76: Phaseneingang
- 78: Phaseneingang
- 80: Phaseneingang
- 82: Schaltelement
- 84: Induktivität
- 86: Kondensator
- 88: Filterdrosseln
- DC: Gleichspannung

## Patentansprüche

1. Kraftstoffpumpenantrieb eines Flugtriebwerks, mit
- einem Pumpenmotor (18A) für eine Kraftstoffpumpe (12), und
- einer Stromversorgungs- und Steuereinrichtung (20A), an die der Pumpenmotor (18A) angeschlossen ist,
dadurch gekennzeichnet, daß
- der Pumpenmotor (18A) ein Drehstrom-Motor ist, und daß
- die Stromversorgungs- und Steuereinrichtung (20A) dazu eingerichtet ist, Drehstrom für den Pumpenmotor (18A) mit einer der gewünschten Förderleistung der Kraftstoffpumpe (12) entsprechenden Frequenz zu erzeugen.

2. Kraftstoffpumpenantrieb nach Anspruch 1,
dadurch gekennzeichnet, daß der Pumpenmotor (18A) ein Drehstrom-Asynchronmotor ist, der insbesondere als Käfigläufer ausgestaltet ist.

3. Kraftstoffpumpenantrieb nach Anspruch 1,
dadurch gekennzeichnet, daß der Pumpenmotor (18A) ein Drehstrom-Synchronmotor ist, der insbesondere einen Permanentmagnet-Läufer aufweist.

4. Kraftstoffpumpenantrieb nach einem der Ansprüche 1 bis 3,
dadurch gekennzeichnet, daß die Spannung des Drehstroms ungefähr proportional zu dessen Frequenz ist.

5. Kraftstoffpumpenantrieb nach einem der Ansprüche 1 bis 4,
dadurch gekennzeichnet, daß die Stromversorgungs- und Steuereinrichtung (20A) einen Drehstromsteller (54) zum Erzeugen des Drehstroms aus einer Gleichspannung (DC) aufweist.

6. Kraftstoffpumpenantrieb nach Anspruch 5,
dadurch gekennzeichnet, daß der Drehstromsteller (54) für jede Phase des Drehstroms je eine Brückenschaltung aus zwei in Reihe geschalteten und an die Gleichspannung (DC) angeschlossenen Schaltelementen (56, 58) aufweist.

7. Flugtriebwerk mit einem Kraftstoffpumpenantrieb nach einem der Ansprüche 1 bis 6, bei dem die von dem Pumpenmotor (18A) angetriebene Kraftstoffpumpe (12) zur Kraftstoffversorgung einer Turbinenbaugruppe (10) vorgesehen ist.

8. Flugtriebwerk nach Anspruch 7,
dadurch gekennzeichnet, daß ein von der Turbinenbaugruppe (10) angetriebener Generator (26) zur zumindest zeit- oder teilweisen Stromversorgung des Pumpenmotors (18A) über die Stromversorgungs- und Steuereinrichtung (20A) vorgesehen ist.

9. Flugtriebwerk nach Anspruch 7 oder Anspruch 8,
dadurch gekennzeichnet, daß der Generator (25) ein Drehstrom-Generator ist.

10. Flugtriebwerk nach einem der Ansprüche 7 bis 9 mit einem Kraftstoffpumpenantrieb nach Anspruch 5 oder Anspruch 6,
dadurch gekennzeichnet, daß die Stromversorgungs- und Steuereinrichtung (20A) einen Gleichrichter (38) zur Erzeugung der Gleichspannung (DC) für den Drehstromsteller (54) aufweist.

11. Flugtriebwerk nach Anspruch 10,
dadurch gekennzeichnet, daß der Gleichrichter (38) ein halb- oder vollgesteuerter Gleichrichter ist.

12. Flugtriebwerk nach Anspruch 11,
dadurch gekennzeichnet, daß eine Steuerlogik (36) der Stromversorgungs- und Steuereinrichtung (20A) dazu eingerichtet ist, die Höhe der von dem Gleichrichter (38) erzeugten Gleichspannung (DC) zu steuern.
